# EUROPÄISCHE PATENTSCHRIFT

(11) **EP 1 494 067 B1**
(45) Veröffentlichungstag und Bekanntmachung des Hinweises auf die Patenterteilung: **23.01.2008**
(21) Anmeldenummer: 03101977.1
(22) Anmeldetag: 02.07.2003
(51) Int. Cl.: G03B 42/02, G21K 4/00

(54) **System mit einem Scanner und einer Speicherschicht sowie Speicherschicht zum Speichern von Röntgeninformationen**
System comprising a scanner and a storage layer, as well as a storage layer for storing x-ray information
Système comprenant un scanner et une couche de stockage, ainsi qu'une couche de stockage pour mémoriser des informations radiographiques

(43) Veröffentlichungstag der Anmeldung: 05.01.2005
(73) Patentinhaber: Agfa-Gevaert HealthCare GmbH, 51373 Leverkusen (DE)
(72) Erfinder: Fasbender, Robert, 85521, Ottobrunn (DE); Niang, Magath, 81243, München (DE); Herrmann, Clemens, 80933, München (DE); Leblans, Paul, 2550, Kontich (BE); Van den Bergh, Rudy, 2547, Lint (BE)

(56) Entgegenhaltungen:
- EP-A- 0 165 340
- EP-A- 0 595 733
- EP-A- 0 964 269
- EP-A- 1 271 558
- DE-A- 2 807 398
- US-A1- 2002 096 653

## Beschreibung

Die Erfindung betrifft ein System mit einem Scanner und einer Speicherschicht sowie eine Speicherschicht zum Speichern von Röntgeninformationen gemäß dem Oberbegriff von Anspruch 1 bzw. 12.

Gattungsgemäße Systeme bzw. Speicherschichten werden, insbesondere für medizinische Zwecke, im Bereich der Computer-Radiographie (CR) eingesetzt. Hierbei werden Röntgenaufnahmen in einer Phosphorschicht aufgezeichnet, indem die durch ein Objekt, beispielsweise einen Patienten, hindurchtretende Röntgenstrahlung als latentes Bild in der Phosphorschicht gespeichert wird. Zum Auslesen des gespeicherten Bildes wird die Phosphorschicht mit Stimulationslicht bestrahlt, wodurch diese entsprechend dem latenten Bild Emissionslicht aussendet, welches von einem optischen Detektor erfasst und in elektrische Signale umgewandelt wird. Die elektrischen Signale können nach Bedarf weiterverarbeitet und auf einem Monitor dargestellt oder an einem entsprechenden Ausgabegerät, wie z. B. einem Drucker ausgegeben werden.

Aus dem Stand der Technik sind Systeme bekannt, in welchen die in einer Speicherschicht gespeicherten Röntgeninformationen mit einem Zeilenscanner ausgelesen werden. Der Zeilenscanner umfasst eine Bestrahlungseinrichtung zur Bestrahlung eines linienförmigen Bereichs der Speicherschicht mit Stimulationsstrahlung und einen zeilenförmigen Detektor zur ortsaufgelösten Erfassung der im linienförmigen Bereich der Speicherschicht angeregten Emissionsstrahlung. Die Speicherschicht weist eine Vielzahl von einzelnen Phosphorpartikeln auf, in welchen die Röntgeninformationen gespeichert sind. Die Phosphorpartikel liegen in Form eines Pulvers vor und sind in ein Medium, insbesondere einen Kunststoff, eingebettet. Speicherschichten diesen Typs werden daher auch als Powder Image Plates (PIPs) bezeichnet. Aufgrund dieser Zusammensetzung und Struktur wird die auf eine Speicherschicht treffende Stimulationsstrahlung in der Speicherschicht gestreut, so dass nicht nur der primär anzuregende linienförmige Bereich, sondern auch angrenzende Bereiche der Schicht zur Aussendung von Emissionslicht angeregt werden. Der auszulesende linienförmige Bereich läßt sich folglich nicht scharf begrenzen, was zu einer Verminderung der Schärfe der zu erfassenden Bildinformation führt.

Zur Verminderung dieses Schärfeverlustes wurden im Stand der Technik Speicherschichten vorgeschlagen, welche einen blauen Farbstoff enthalten. Durch den blauen Farbstoff wird die Stimulationsstrahlung, welche im Allgemeinen im roten Spektralbereich liegt, in der Speicherschicht teilweise absorbiert und dadurch die mittlere Weglänge, welche die Stimulationsstrahlung in der Speicherschicht zurücklegt, verkürzt. Auf diese Weise kann zwar der anzuregende linienförmige Bereich auf der Speicherschicht besser begrenzt werden, so dass die Schärfe der auszulesenden Bildinformationen erhöht wird. Durch die Absorption der Stimulationsstrahlung wird jedoch gleichzeitig ein tiefes Eindringen der Stimulationsstrahlung in die Speicherschicht verhindert, so dass lediglich obere Teilschichten der Speicherschicht zur Aussendung von Emissionslicht angeregt werden können. Aufgrund dieser verringerten Auslesetiefe wird die Intensität der ausgesandten Emissionsstrahlung herabgesetzt, was ein erhöhtes Signalrauschen zur Folge hat. Trotz verbesserter Bildschärfe wird hierdurch die Bildinformation insgesamt nicht signifikant verbessert.

Darüber hinaus führt der blaue Farbstoff in der Speicherschicht lediglich zu einer Erhöhung der Schärfe senkrecht zur Ausdehnung des angeregten linienförmigen Bereichs auf der Speicherschicht. Da der gesamte linienförmige Bereich mit Stimulationsstrahlung bestrahlt wird, ist dagegen in Richtung dieses Bereichs keine Erhöhung der Schärfe möglich.

Die europäische Patentanmeldung EP 1 271 558 A2 offenbart unter anderem eine aus einer Trägerschicht, einer Fluoreszenzschicht, einer Speicherschicht und einer Schutzschicht zusammengesetzte Bildspeicherplatte, die mit einem Farbstoff eingefärbt werden kann, der unter anderem Licht aus der Speicherschicht teilweise absorbieren kann. Eine entsprechende, allgemeine Einfärbung der Bildspeicherplatte würde jedoch zu keiner besonderen Erhöhung der Schärfe der aus der Speicherschicht ausgelesenen Bildinformationen bei gleichzeitig niedrigen Verlusten in der Intensität des von der Speicherschicht ausgehenden Lichts führen.

Auch EP 0 595 733 A diskutiert die Einfärbung einer Speicherschicht. Dokument US 2002/096653 A zeigt einen Scanner zum Auslesen einer Speicherschicht, wobei eine Bestrahlungseinrichtung des Scanners zur linienförmigen Bestrahlung einer Speicherschicht ausgebildet ist.

Es ist Aufgabe der Erfindung, ein System mit einem Scanner und einer Speicherschicht sowie eine Speicherschicht zum Speichern von Röntgeninformationen anzugeben, welches bzw. welche eine Erhöhung der Schärfe der Bildinformationen bei möglichst niedrigen Verlusten in der Intensität des Emissionslichts gewährleisten.

Diese Aufgabe wird gemäß Anspruch 1 bzw. 12 dadurch gelöst, dass das Medium, in welches die zum Speichern von Röntgeninformationen ausgebildeten Partikel eingebettet sind, sowohl senkrecht als auch parallel zur Ebene der Speicherschicht gerichtete Komponenten der Emissionsstrahlung, welche von den einzelnen Partikeln emittiert wird, zumindest teilweise absorbieren kann, wodurch die mittlere Weglänge der von den Partikeln (20) abgegebenen Emissionsstrahlung innerhalb der Speicherschicht (1) in allen Raumrichtungen herabgesetzt wird.

Die Erfindung basiert auf dem Gedanken, das Medium derart einzufärben, dass die von einzelnen Partikeln abgegebene und gegebenenfalls an weiteren Partikeln gestreute Emissionsstrahlung teilweise absorbiert und dadurch abgeschwächt wird. Da die einzelnen Partikel von dem absorbierenden Medium umgeben sind, wird die Emissionsstrahlung in allen Raumrichtungen abgeschwächt und deren Streuung entsprechend vermindert. Im Gegensatz zu der aus dem Stand der Technik bekannten Abschwächung der Stimulationsstrahlung wird durch die erfindungsgemäße Abschwächung der Emissionsstrahlung die Bildschärfe nicht nur senkrecht zur Richtung des angeregten linienförmigen Bereichs auf der Speicherschicht, sondern auch in Richtung des angeregten linienförmigen Bereichs erhöht. Bei einer ortsaufgelösten Erfassung der von dem linienförmigen Bereich ausgesandten Emissionsstrahlung mit einem Zeilendetektor wird daher auch in Zeilenrichtung des Zeilendetektors eine erhöhte Schärfe der Bildinformation detektiert. Wie Versuche gezeigt haben, ist dabei der durch die teilweise Absorption von

Emissionsstrahlung in der Speicherschicht bedingte Intensitätsverlust bei der detektierten Emissionsstrahlung überraschenderweise so gering, dass das Signalrauschen nicht signifikant erhöht wird. Dieses Resultat steht im Widerspruch zu den Erwartungen des Fachmanns, wonach eine teilweise Absorption der Emissionsstrahlung im Medium der Speicherschicht zu einer deutlichen Schwächung der im Allgemeinen sehr schwachen Intensität der Emissionsstrahlung und folglich zu einem signifikant höheren Signalrauschen führen würde.

Insgesamt wird bei dem erfindungsgemäßen System bzw. der erfindungsgemäßen Speicherschicht eine verbesserte Schärfe der Bildinformationen, insbesondere in Richtung des auszulesenden linienförmigen Bereichs, bei gleichzeitig hoher Intensität der zu erfassenden Emissionsstrahlung erzielt.

In einer bevorzugten Ausführung ist vorgesehen, dass das Medium die Komponenten der Emissionsstrahlung in einem ersten Wellenlängenbereich zumindest teilweise absorbieren kann, welcher im Bereich von blauem Licht, insbesondere zwischen 400 nm und 440 nm, liegt. Hierdurch wird erreicht, dass alle wesentlichen spektralen Anteile der bei üblichen Partikelzusammensetzungen, wie z. B. Phosphorpartikel auf der Basis von BaFBrₓIₓ₋₁:Eu, emittierten Emissionsstrahlung besonders zuverlässig abgeschwächt werden, um einen ausreichend hohen Schärfegewinn zu gewährleisten.

Vorzugsweise enthält das Medium einen ersten Farbstoff, welcher die Komponenten der Emissionsstrahlung im ersten Wellenlängenbereich zumindest teilweise absorbieren kann. Insbesondere weist der erste Farbstoff eine hohe Absorption für die Emissionsstrahlung und eine niedrige Absorption für die Stimulationsstrahlung auf. Hierdurch wird einerseits eine Streuung der angeregten Emissionsstrahlung zuverlässig vermindert, während andererseits eine Streuung der Stimulationsstrahlung ermöglicht wird. Letzteres führt zu einer erhöhten Auslesetiefe und damit zu höheren Intensitäten des zu erfassenden Emissionslichts. Auf diese Weise wird eine verbesserte Schärfe der Bildinformationen in Richtung des Zeilenscanners bei gleichzeitig hoher Emissionsintensität erreicht.

Vorzugsweise enthält das Medium den ersten Farbstoff in Form von roten Farbpigmenten. Diese können mit den ursprünglich in Form eines Pulvers vorliegenden Phosphorpartikeln vermischt und auf einfache Weise in das Medium eingebracht werden. Hierdurch wird eine gleichmäßige Verteilung des ersten Farbstoffs im Medium und folglich eine zuverlässige Absorption von Emissionsstrahlung in allen Raumrichtungen gewährleistet.

Erfindungsgemäß ist vorgesehen, dass das Medium sowohl senkrecht als auch parallel zur Ebene der Speicherschicht gerichtete Komponenten der Stimulationsstrahlung in einem zweiten Wellenlängengereich, in welchen die Partikel zum Aussenden von Emissionsstrahlung angeregt werden können, zumindest teilweise absorbieren kann. Dieser Ausführungsform liegt der Gedanke zugrunde, dass neben der Emissionsstrahlung auch Komponenten der Stimulationsstrahlung zumindest teilweise absorbiert werden, um außer der Streuung der Emissionsstrahlung zusätzlich die Streuung von Stimulationsstrahlung in der Speicherschicht zu reduzieren. Hierdurch wird zusätzlich die Schärfe der zu erfassenden Bildinformation erhöht. Beim Auslesen mittels eines Zeilenscanners erfolgt eine Erhöhung der Schärfe hierbei senkrecht zur Richtung des beleuchteten linienförmigen Bereichs auf der Speicherplatte. Zusammen mit der erfindungsgemäßen Absorption des Emissionslichts wird somit insgesamt eine Erhöhung der Schärfe sowohl senkrecht zur Richtung als auch in Richtung des auszulesenden linienförmigen Bereichs der Speicherschicht erzielt.

Vorzugsweise liegt der zweite Wellenlängenbereich im Bereich von rotem Licht, insbesondere zwischen 620 nm und 690 nm. Hierdurch wird gewährleistet, dass alle wesentlichen spektralen Anteile der Stimulationsstrahlung, welche die Phosphorpartikel zur Aussendung von Emissionslicht anregen kann, ausreichend abgeschwächt werden.

Das Medium enthält einen zweiten Farbstoff, welcher die Komponenten der Stimulationsstrahlung im zweiten Wellenlängenbereich zumindest teilweise absorbieren kann. Der zweite Farbstoff weist eine hohe Absorption für die Stimulationsstrahlung und eine niedrige Absorption für die Emissionsstrahlung auf. Durch den zweiten Farbstoff im Medium wird erreicht, dass die Verminderung der Streuung der Stimulationsstrahlung unabhängig von der erfindungsgemäßen Reduktion der Streuung der Emissionsstrahlung eingestellt werden kann.

In Analogie zum ersten Farbstoff ist bevorzugt, dass das Medium den zweiten Farbstoff in Form von blauen Farbpigmenten enthält. Auch in diesem Fall können die blauen Farbpigmente mit den Phosphorpartikeln vermischt und dadurch auf einfache Weise in das Medium eingebracht werden.

Erfindungsgemäß ist vorgesehen, dass die Bestrahlungseinrichtung mehrere einzelne Strahlungsquellen sowie eine Fokussiereinrichtung umfasst. Die einzelnen Strahlungsquellen senden jeweils divergente Stimulationsstrahlungsbündel aus, welche durch die Fokussiereinrichtung in der Weise auf den linienförmigen Bereich der Speicherschicht fokussiert werden, dass sie sich in Richtung des linienförmigen Bereichs zumindest teilweise überlagern. Hierdurch wird ein hohes Maß an Homogenität der Intensität der Stimulationsstrahlung entlang des linienförmigen Bereichs erreicht. Darüber hinaus wird durch die Überlagerung der jeweiligen Stimulationsstrahlungsbündel gewährleistet, dass bei einem Ausfall einer einzelnen Strahlungsquelle der zu beleuchtende Ausschnitt des linearen Bereichs von benachbarten Strahlungsquellen beleuchtet und angeregt werden kann.

Vorzugsweise umfasst die Fokussiereinrichtung mindestens eine Zylinderlinse oder einen Zylinderspiegel. Hierdurch wird eine relativ scharf begrenzte Fokussierung der von den einzelnen Strahlungsquellen jeweils ausgehenden Stimulationsstrahlungsbündel auf den linienförmigen Bereich der Speicherschicht gewährleistet. Etwaige Schärfeverluste aufgrund von optischen Abbildungsfehlern können hierdurch gering gehalten werden.

Eine weitere bevorzugte Ausgestaltung des erfindungsgemäßen Systems sieht vor, dass der Detektor eine Vielzahl von entlang einer Linie angeordneten lichtempfindlichen Detektorelementen umfasst. Hierdurch wird auf einfache Weise eine ortsaufgelöste Erfassung der von der Speicherschicht entlang des linienförmigen Bereichs emittierten Emissionsstrahlung ermöglicht.

Vorzugsweise ist eine Abbildungseinrichtung vorgesehen, welche die von dem linienförmigen Bereich auf der Speicherschicht ausgehende Emissionsstrahlung auf dem Detektor abbildet. Hierdurch ist eine eindeutige Zuordnung von Emissionsstrahlung aussendenden Teilbereichen auf der Speicherschicht zu entsprechenden Bereichen, insbesondere einzelnen lichtempfindlichen Detektorelementen, auf dem Detektor gegeben.

In einer bevorzugten Ausgestaltung ist vorgesehen, dass die Abbildungseinrichtung eine Vielzahl von entlang einer Linie angeordneten Mikrolinsen aufweist. Hierdurch werden Abbildungsfehler gering gehalten und gleichzeitig kurze Abstände zwischen der Speicherschicht und dem Detektor ermöglicht, so dass Intensitätsverluste sehr gering gehalten werden können.

Eine weitere bevorzugte Ausbildung der Erfindung sieht vor, dass die Bestrahlungseinrichtung bezüglich einer Transportrichtung, in welcher der Scanner relativ zur Speicherschicht bewegt wird, vor dem Detektor angeordnet ist. Der Scanner wird demnach mit der Bestrahlungseinrichtung voran relativ zur Speicherschicht bewegt. Hierdurch wird erreicht, dass ein Großteil von in der Speicherschicht gestreuter Stimulationsstrahlung in eine Richtung gestreut wird, welche der Transportrichtung entgegengesetzt gerichtet ist. Die Streuung der Stimulationsstrahlung erfolgt daher vorwiegend in Bereiche der Speicherschicht, welche bereits zur Aussendung von Emissionsstrahlung in vorangegangenen Auslesevorgängen angeregt worden sind. Da hierdurch nur ein geringer Anteil der in der Speicherschicht gestreuten Stimulationsstrahlung in noch nicht ausgelesene Bereiche gestreut wird, werden Intensitäts- und Schärfeverluste weiter reduziert.

Die Erfindung wird nachfolgend anhand von Figuren näher erläutert.

Es zeigen:
- Fig. 1: ein erfindungsgemäßes System mit einem Scanner und einer Speicherschicht;
- Fig. 2: einen vergrößerten Querschnitt durch eine erfindungsgemäße Speicherschicht; und
- Fig. 3: eine Draufsicht auf eine erfindungsgemäße Speicherschicht.

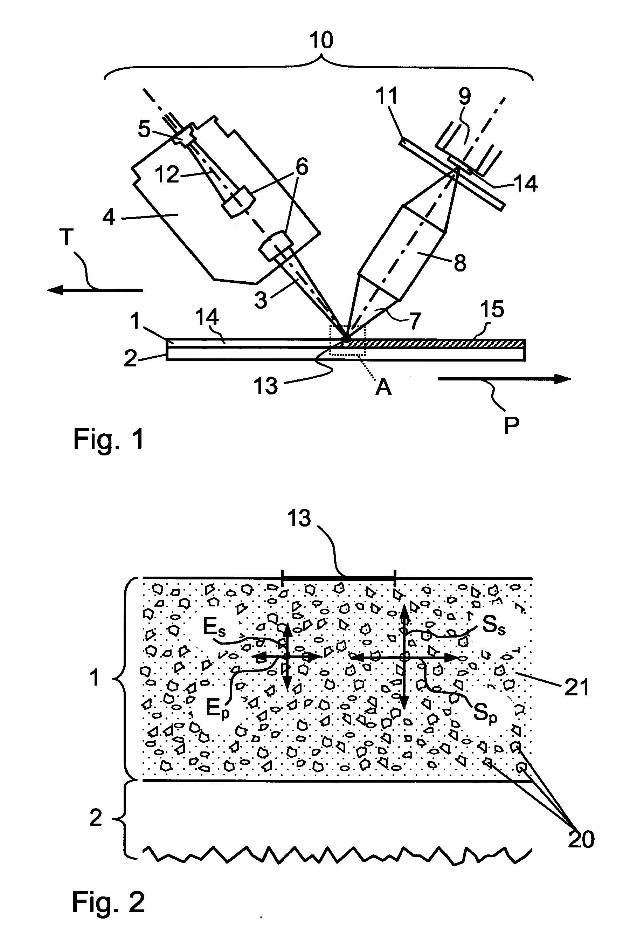

Figur 1 zeigt ein erfindungsgemäßes System mit einem Scanner 10 und einer Speicherschicht 1. Die auszulesende Speicherschicht 1 befindet sich auf einer Trägerschicht 2 und wird mit Stimulationsstrahlung 3 bestrahlt, welche von einer Bestrahlungseinrichtung 4 erzeugt wird. Die durch die Stimulationsstrahlung 3 in der Speicherschicht 1 angeregte Emissionsstrahlung 7 wird mit einem Detektor 9 erfasst. Die Bestrahlungseinrichtung 4 und der Detektor 9, einschließlich einer Abbildungseinrichtung 8 und eines optischen Filters 11, bilden zusammen den Scanner 10, welcher während des Auslesevorgangs in Transportrichtung T relativ zur Speicherschicht 1 bewegt wird.

Die Bestrahlungseinrichtung 4 weist mehrere einzelne Strahlungsquellen 5 sowie eine Fokussiereinrichtung 6 auf, welche die von den Strahlungsquellen 5 ausgehenden Stimulationsstrahlungsbündel 12 auf die Speicherschicht 1 fokussieren. Die einzelnen Strahlungsquellen 5 - beispielsweise Leuchtdioden oder Laserdioden - sind in einer senkrecht zur Figurenebene verlaufenden Zeile angeordnet. Die Fokussiereinrichtung 6 weist zwei längliche Zylinderlinsen auf, welche im Wesentlichen parallel zu den in einer Zeile angeordneten einzelnen Strahlungsquellen 5 verlaufen. Die von den einzelnen Strahlungsquellen 5 ausgehenden divergenten Stimulationsstrahlungsbündel 12 werden durch die Fokussiereinrichtung 6 in Figurenebene gebündelt und treffen als konvergentes Strahlungsbündel der Stimulationsstrahlung 3 auf die Speicherschicht 1. Senkrecht zur Figurenebene überlagern sich die divergenten Stimulationsstrahlungsbündel 12 der einzelnen Strahlungsquellen 5 in der Weise, dass das konvergente Strahlungsbündel eine senkrecht zur Figurenebene verlaufende, kontinuierliche Stimulationsstrahlungslinie 13 auf der Speicherschicht 1 beschreibt.

Die im Bereich der Stimulationsstrahlungslinie 13 in der Speicherschicht 1 angeregte und abgestrahlte Emissionsstrahlung 7 wird mit einem Detektor 9 ortsaufgelöst erfasst. Hierzu weist der Detektor 9 eine Vielzahl von lichtempfindlichen Detektorelementen 14 auf, welche entlang einer senkrecht zur Figurenebene verlaufenden Linie angeordnet sind. Die im Bereich der Stimulationsstrahlungslinie 13 auf der Speicherschicht 1 emittierte Emissionsstrahlung 7 wird mittels einer Abbildungseinrichtung 8 auf die lichtempfindlichen Detektorelemente 14 des Detektors 9 abgebildet. Der Detektor 9 ist vorzugsweise als CCD- oder Photodiodenzeile ausgebildet. Als Abbildungseinrichtung 8 eignen sich vorzugsweise Mikrolinsen, welche entlang einer senkrecht zur Figurenebene - und damit parallel zum zeilenförmig ausgebildeten Detektor 9 - verlaufenden Linie angeordnet sind. Als Abbildungseinrichtung eignen sich auch Gradientenindex-Linsen, insbesondere selbstfokussierende Linsen, welche ebenfalls in einer senkrecht zur Figurenebene verlaufenden Zeile angeordnet sind.

Optional kann im Strahlengang zwischen der Speicherschicht 1 und den Detektoren 9 ein optisches Filter 11 vorgesehen sein, welches im Wellenlängenbereich der Emissionsstrahlung 7 durchlässig ist und im Wellenlängenbereich der Stimulationsstrahlung im Wesentlichen undurchlässig ist. Hierdurch wird gewährleistet, dass die Erfassung der Emissionsstrahlung nicht durch Anteile der Stimulationsstrahlung verfälscht wird, welche an der Speicherschicht 1 reflektiert werden und zum Detektor 9 gelangen können.

In dem gezeigten Ausführungsbeispiel wird der Scanner 10 mit einem nicht dargestellten Transportmechanismus in Transportrichtung T über die ruhende Speicherschicht 1 bewegt, wobei durch die Stimulationsstrahlungslinie 13 unterschiedliche linienförmige Bereiche der Speicherschicht 1 sukzessive angeregt werden und die jeweils ausgesandte Emissionsstrahlung 7 ortsaufgelöst erfasst wird. Die Bestrahlungseinrichtung 4 ist hierbei bezüglich der Transportrichtung T vor dem Detektor 9 angeordnet, d. h. der Scanner 10 läuft mit der Bestrahlungseinrichtung 4 voraus über die Speicherschicht 1. Hierdurch wird erreicht, dass ein Großteil der in der Speicherschicht gestreuten Stimulationsstrahlung 3 in Bereiche 15 gestreut wird, welche bereits ausgelesen worden sind, und ein nur kleiner Teil in noch nicht ausgelesene Bereiche 14 der Speicherschicht gestreut wird. Hierdurch können bei dem erfindungsgemäßen System zusätzlich Intensitäts- und Schärfeverluste aufgrund einer Streuung von Stimulationsstrahlung 3 innerhalb der Speicherschicht 1 vermindert werden.

Im dargestellten Beispiel wird der Scanner 10 über eine ortsfeste Speicherschicht 1 bewegt. Die obigen Ausführungen gelten selbstverständlich aber auch dann, wenn der Scanner 10 ortsfest ist und die auf der Trägerschicht 2 befindliche Speicherschicht 1 in Bewegungsrichtung P relativ zu diesem transportiert wird. Dasselbe gilt analog für Ausgestaltungen, bei denen sowohl der Scanner 10 in Transportrichtung T als auch die Speicherschicht 1 in Bewegungsrichtung P bewegt werden.

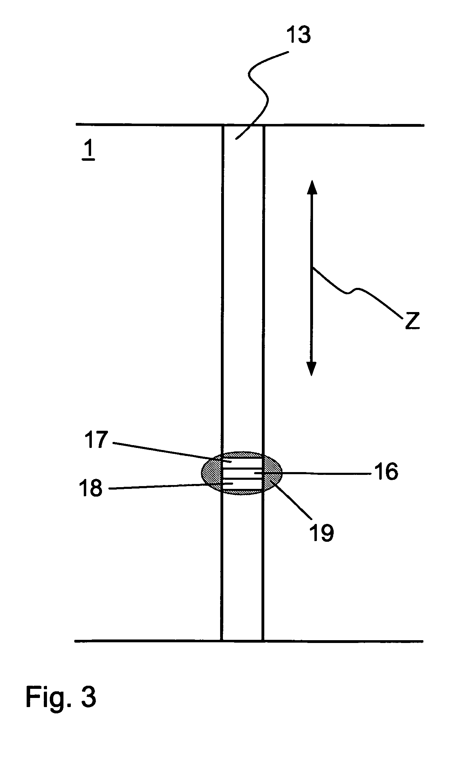

Das in Figur 1 dargestellte Ausführungsbeispiel des erfindungsgemäßen Systems umfasst neben dem beschriebenen Scanner 10 die Speicherschicht 1, welche derart ausgestaltet ist, dass Komponenten der angeregten Emissionsstrahlung 7 durch das Medium in der Speicherschicht 1 sowohl senkrecht als auch parallel zur Ebene der Speicherschicht 1 teilweise absorbiert werden. Hierdurch wird eine Streuung der angeregten Emissionsstrahlung 7 innerhalb der Speicherschicht 1 stark vermindert. Dies wird im Folgenden anhand der Figuren 2 und 3 näher erläutert.

Figur 2 zeigt einen vergrößerten Querschnitt durch eine erfindungsgemäße Speicherschicht 1 im Bereich des in Figur 1 eingezeichneten Ausschnitts A. Die auf der Trägerschicht 2 befindliche Speicherschicht 1 umfasst eine Vielzahl von einzelnen Partikeln 20, in denen bei einem Röntgenvorgang Röntgeninformationen gespeichert werden können. Die einzelnen Partikel 20 haben im Allgemeinen eine unregelmäßige Form, insbesondere ohne Vorzugsrichtung und Symmetrieachsen.

Typische Durchmesser der einzelnen Partikel 20 liegen zwischen etwa 3 µm und 12 µm, insbesondere bei etwa 7 µm. Die Partikel 20 sind in ein Medium 21 eingebettet und über die gesamte Dicke der Speicherschicht 1 verteilt angeordnet. Da die Partikel 20 im Allgemeinen in Form eines Pulvers vorliegen, welches mit dem Medium 21 vermischt und durch dieses gebunden wird, wird dieser Typ von Speicherschicht 1 auch als Powder Image Plate (PIP) bezeichnet. Typische Dicken solcher Speicherschichten 1 liegen zwischen 50 µm und 500 µm, insbesondere bei etwa 250 µm.

Beim Auslesen der in den einzelnen Partikeln 20 der Speicherschicht 1 gespeicherten Röntgeninformationen wird die Speicherschicht 1 von ihrer Oberseite her mit Stimulationsstrahlung bestrahlt, welche eine senkrecht zur Ebene der Figur 2 verlaufende Stimulationsstrahlungslinie 13 auf der Speicherschicht 1 beschreibt. Die Stimulationsstrahlung dringt teilweise in die Speicherschicht 1 ein und regt einzelne Partikel 20 zur Aussendung von Emissionsstrahlung an. Die von einem Partikel 20 abgegebene Emissionsstrahlung durchquert das Medium 21, bis es auf weitere Partikel 20 trifft und an diesen gestreut wird. Die gestreute Strahlung kann dann erneut an weiteren Partikeln gestreut werden usw. Hierdurch findet eine sog. Aufstreuung der Emissionsstrahlung statt, welche zu einer Verbreiterung des auszulesenden linienförmigen Bereichs, d.h. der Stimulationsstrahlungslinie 13, und folglich zu einem Verlust an Schärfe der Ortsinformation führt.

Erfindungsgemäß wird dieser Schärfeverlust vermindert, indem die Emissionsstrahlung durch das zwischen den einzelnen Partikeln 20 befindliche Medium 21 teilweise absorbiert und damit abgeschwächt wird. Da die einzelnen Partikel 20 jeweils vollständig von dem Medium 21 umgeben sind und die von einem einzelnen Partikel 20 ausgesandte Emissionsstrahlung im Allgemeinen sowohl Komponenten E_{S} senkrecht zur Ebene der Speicherschicht 1 als auch Komponenten E_{P} parallel zur Ebene der Speicherschicht 1 aufweist, werden beide Komponenten E_{S} und E_{P} der Emissionsstrahlung durch das Medium 21 in gleicher Weise abgeschwächt. Hierdurch wird die mittlere Weglänge der von einzelnen Partikeln 20 abgegebenen Emissionsstrahlung innerhalb der Speicherschicht 1 und damit die Aufstreuung der Emissionsstrahlung in alle Raumrichtungen deutlich herabgesetzt.

Vorzugsweise enthält das Medium 21 einen ersten Farbstoff, welcher im Bereich von blauem Licht, insbesondere zwischen 400 nm und 440 nm hohe Absorptionskoeffizienten aufweist. Der erste Farbstoff ist vorzugsweise in Form von roten Farbpigmenten im Medium 21 enthalten. Durch die Rotfärbung des zwischen den einzelnen Partikeln 20 befindlichen Mediums 21 wird erreicht, dass die üblicherweise im roten Spektralbereich liegende Stimulationsstrahlung in die Speicherschicht 1 eindringen kann, eine Aufstreuung der von den einzelnen Partikeln 20 abgegebenen Emissionsstrahlung, welche üblicherweise im blauen Spektralbereich liegt, jedoch verringert wird. Auf diese Weise wird eine scharfe räumliche Begrenzung der zu erfassenden Emissionsstrahlung bei gleichzeitig hoher Emissionsintensität gewährleistet.

Neben der Streuung von Emissionsstrahlung trägt auch die Streuung von Stimulationsstrahlung innerhalb der Speicherschicht 1 zu einer Verunschärfung der zu erfassenden Bildinformation bei. Um diese Beiträge möglichst gering zu halten, kann das Medium 21 zusätzlich in der Weise ausgestaltet sein, dass sowohl senkrecht als auch parallel zur Ebene der Speicherschicht 1 gerichtete Komponenten S_{S} bzw. S_{P} der an den Partikeln 20 gestreuten Stimulationsstrahlung im Wellenlängenbereich der Stimulationsstrahlung zumindest teilweise absorbieren kann. Vorzugsweise enthält das Medium 21 einen zweiten Farbstoff, welcher im Bereich von rotem Licht, insbesondere zwischen 620 nm und 690 nm hohe Absorptionskoeffizienten aufweist. Hierdurch wird eine Abschwächung der Stimulationsstrahlung innerhalb der Speicherschicht 1 erreicht, wodurch eine Aufstreuung der Stimulationsstrahlung und eine damit einhergehende Verunschärfung der angeregten Stimulationsstrahlungslinie 13 auf der Speicherschicht 1 vermindert wird. Vorzugsweise enthält das Medium 21 den zweiten Farbstoff in Form von blauen Farbpigmenten. Zusammen mit dem ersten Farbstoff, welcher ebenfalls vorzugsweise in Form von roten Farbpigmenten vorliegt, kann dann durch Wahl der Konzentration der jeweiligen Farbpigmente die Abschwächung der Emissions- und Stimulationsstrahlung unabhängig voneinander gezielt eingestellt werden.

Figur 3 zeigt eine Draufsicht auf eine erfindungsgemäße Speicherschicht 1 im Bereich der in Figur 1 eingezeichneten Stimulationsstrahlungslinie 13. Zur besseren Veranschaulichung wurde die Stimulationsstrahlungslinie 13 gegenüber Figur 1 stark verbreitert dargestellt. Die vorteilhafte Wirkung der Erfindung wird nachfolgend beispielhaft anhand von drei Abschnitten 16 bis 18 der Stimulationsstrahlungslinie 13 erläutert.

Die gesamte Stimulationsstrahlungslinie 13 wird mit Stimulationsstrahlung bestrahlt, so dass jeder einzelne Abschnitt 16 bis 18 der Stimulationsstrahlungslinie 13 zur Aussendung von Emissionsstrahlung angeregt wird. Wegen der Streuung der angeregten Emissionsstrahlung in der Speicherschicht 1 wird die in jedem Abschnitt 16 bis 18 angeregte Emissionsstrahlung nicht nur von dem jeweiligen angeregten Abschnitt 16, 17 bzw. 18 emittiert, sondern auch von daran angrenzenden Bereichen. Dies führt dazu, dass die beispielsweise im Bereich des Abschnitts 16 angeregte Emissionsstrahlung auch in benachbarte Bereiche gestreut wird, in welchen die Abschnitte 17 und 18 liegen. Dies ist durch den eingezeichneten Streustrahlungsbereich 19 angedeutet. Die von den jeweiligen Abschnitten 17 bzw. 18 ausgehende Emissionsstrahlung enthält somit auch Anteile der Emissionsstrahlung aus Abschnitt 16, was einen Verlust an Schärfe der erfassten Bildinformation bedeutet, da die erfasste Bildinformation nicht nur von Abschnitt 17 bzw. 18 stammt. Entsprechendes gilt umgekehrt für den Einfluss der gestreuten Emissionsstrahlung der Abschnitte 17 und 18 auf Abschnitt 16.

Wie bereits oben näher erläutert wurde, hat die erfindungsgemäße Einfärbung der Speicherschicht 1 mit rotem Farbstoff eine geringere Aufstreuung der Emissionsstrahlung in der Speicherschicht 1 zur Folge. Hierdurch wird der Streustrahlungsbereich 19 des angeregten Abschnitts 16 verkleinert. Die Schärfe der auszulesenden Bildinformation wird dadurch nicht nur senkrecht zur Zeilenrichtung Z der Stimulationsstrahlungslinie 13, sondern auch parallel zur Zeilenrichtung Z, d. h. im dargestellten Beispiel in den benachbarten Abschnitten 17 und 18, erhöht.

Durch eine ortsaufgelöste Erfassung des von der Stimulationsstrahlungslinie 13 ausgehenden Emissionslichts mit einem Zeilenscanner wird die Erhöhung der Schärfe in beiden Richtungen mit erfasst. Der aufgrund der roten Einfärbung der Speicherschicht 1 zu erwartende Verlust an Intensität des detektierten Emissionslichts ist hierbei überraschenderweise sehr gering, so dass neben einer besseren Schärfe der Bildinformation, insbesondere in Zeilenrichtung Z, auch ein ausreichend hohes Signal-Rausch-Verhältnis gewährleistet ist.

Durch zusätzliches Einfärben der Speicherschicht 1 mit einem blauen Farbstoff wird darüber hinaus die Streuung von Stimulationsstrahlung vermindert. Bei einer ortsaufgelösten Erfassung der Bildinformation entlang der Stimulationsstrahlungslinie 13 mit einem Zeilenscanner trägt dies zu einer weiteren Erhöhung der Schärfe - im Gegensatz zur roten Einfärbung jedoch nur senkrecht zur Zeilenrichtung Z - bei.

## Patentansprüche

1. System mit einem Scanner (10) und einer Speicherschicht (1),
wobei die Speicherschicht (1) eine Vielzahl von Partikeln (20) umfasst, welche
- zum Speichern von Röntgeninformationen ausgebildet sind,
- durch eine Stimulationsstrahlung (3) zur Emission einer den Röntgeninformationen entsprechenden Emissionsstrahlung (7) angeregt werden können und
- in ein Medium (21) eingebettet und über die gesamte Dicke der Speicherschicht (1) verteilt sind,
und wobei der Scanner (10)
- eine Bestrahlungseinrichtung (4) zur Bestrahlung eines linienförmigen Bereichs (13) auf der Speicherschicht (1) mit Stimulationsstrahlung (3) und
- einen Detektor (9) zur ortsaufgelösten Erfassung der von der Speicherschicht (1) entlang des linienförmigen Bereichs (13) emittierten Emissionsstrahlung (7)
umfasst,
**dadurch gekennzeichnet, dass**
- das Medium (21), in welchem die Partikel eingebettet sind, sowohl senkrecht als auch parallel zur Ebene der Speicherschicht (1) gerichtete Komponenten (E_{S} bzw. E_{P}) der Emissionsstrahlung, welche von den einzelnen Partikeln (20) emittiert wird, zumindest teilweise absorbieren kann, wodurch die mittlere Weglänge der von den Partikeln (20) abgegebenen Emissionsstrahlung innerhalb der Speicherschicht (1) in allen Raumrichtungen herabgesetzt wird,
- das Medium (21) einen zweiten Farbstoff enthält, welcher sowohl senkrecht als auch parallel zur Ebene der Speicherschicht gerichtete Komponenten (S_{S} bzw. S_{P}) der Stimulationsstrahlung in einem zweiten Wellenlängenbereich, in welchem die Partikel (20) zum Aussenden von Emissionsstrahlung angeregt werden können, zumindest teilweise absorbieren kann, wobei der zweite Farbstoff eine hohe Absorption für die Stimulationsstrahlung und eine niedrige Absorption für die Emissionsstrahlung aufweist, und
- die Bestrahlungseinrichtung (4) mehrere einzelne Strahlungsquellen (5) und eine Fokussiereinrichtung (6) umfasst, wobei die einzelnen Strahlungsquellen (5) jeweils Stimulationsstrahlungsbündel (12) aussenden, welche durch die Fokussiereinrichtung (6) auf den linienförmigen Bereich (13) der Speicherschicht (1) fokussiert werden und sich in Richtung des linienförmigen Bereichs (13) zumindest teilweise überlagern, wobei eine kontinuierliche Stimulationsstrahlungslinie (13) auf der Speicherschicht (1) erhalten wird.

2. System nach Anspruch 1, **dadurch gekennzeichnet, dass** das Medium (21) die Komponenten (E_{S}, E_{P}) der Emissionsstrahlung in einem ersten Wellenlängenbereich zumindest teilweise absorbieren kann, welcher im Bereich von blauem Licht, insbesondere zwischen 400 nm und 440 nm, liegt.

3. System nach Anspruch 2, **dadurch gekennzeichnet, dass** das Medium (21) einen ersten Farbstoff enthält, welcher die Komponenten (E_{S}, E_{P}) der Emissionsstrahlung im ersten Wellenlängenbereich zumindest teilweise absorbieren kann.

4. System nach Anspruch 3, **dadurch gekennzeichnet, dass** das Medium (21) den ersten Farbstoff in Form von roten Farbpigmenten enthält.

5. System nach einem der vorhergehenden Ansprüche, **dadurch gekennzeichnet, dass** der zweite Wellenlängenbereich im Bereich von rotem Licht, insbesondere zwischen 620 nm und 690 nm, liegt.

6. System nach Anspruch 5, **dadurch gekennzeichnet, dass** das Medium (21) den zweiten Farbstoff in Form von blauen Farbpigmenten enthält.

7. System nach einem der vorangehenden Ansprüche, **dadurch gekennzeichnet, dass** die Fokussiereinrichtung (6) mindestens eine Zylinderlinse oder einen Zylinderspiegel umfasst.

8. System nach einem der vorangehenden Ansprüche, **dadurch gekennzeichnet, dass** der Detektor (9) eine Vielzahl von entlang einer Linie angeordneten lichtempfindlichen Detektorelementen (14) umfasst.

9. System nach einem der vorangehenden Ansprüche, **dadurch gekennzeichnet, dass** eine Abbildungseinrichtung (8) vorgesehen ist, welche die von dem linienförmigen Bereich (13) auf der Speicherschicht (1) ausgehende Emissionsstrahlung (7) auf den Detektor (9) abbildet.

10. System nach Anspruch 9, **dadurch gekennzeichnet, dass** die Abbildungseinrichtung (8) eine Vielzahl von entlang einer Linie angeordneten Mikrolinsen aufweist.

11. System nach einem der vorangehenden Ansprüche, **dadurch gekennzeichnet, dass** die Bestrahlungseinrichtung (4) bezüglich einer Transportrichtung (T), in welcher der Scanner (10) relativ zur Speicherschicht (1) bewegt wird, vor dem Detektor (9) angeordnet ist.

12. Speicherschicht zum Speichern von Röntgeninformationen mit einer Vielzahl von Partikeln (20), welche
- zum Speichern von Röntgeninformationen ausgebildet sind,
- durch eine Stimulationsstrahlung (3) zur Emission einer den Röntgeninformationen entsprechenden Emissionsstrahlung (7) angeregt werden können und
- in ein Medium (21) eingebettet und über die gesamte Dicke der Speicherschicht (1) verteilt sind,
**dadurch gekennzeichnet, dass**
- das Medium (21), in welchem die Partikel eingebettet sind, sowohl senkrecht als auch parallel zur Ebene der Speicherschicht (1) gerichtete Komponenten (E_{S} bzw. E_{P}) der Emissionsstrahlung, welche von den einzelnen Partikeln (20) emittiert wird, zumindest teilweise absorbieren kann, wodurch die mittlere Weglänge der von den Partikeln abgegebenen Emissionsstrahlung innerhalb der Speicherschicht (1) in allen Raumrichtungen herabgesetzt wird, und
- das Medium (21) einen zweiten Farbstoff enthält, welcher sowohl senkrecht als auch parallel zur Ebene der Speicherschicht gerichtete Komponenten (S_{S} bzw. S_{P}) der Stimulationsstrahlung in einem zweiten Wellenlängenbereich, in welchem die Partikel (20) zum Aussenden von Emissionsstrahlung angeregt werden können, zumindest teilweise absorbieren kann, wobei der zweite Farbstoff eine hohe Absorption für die Stimulationsstrahlung und eine niedrige Absorption für die Emissionsstrahlung aufweist.

13. Speicherschicht nach Anspruch 12, **dadurch gekennzeichnet, dass** das Medium (21) die Komponenten (E_{S}, E_{P}) der Emissionsstrahlung in einem ersten Wellenlängenbereich zumindest teilweise absorbieren kann, welcher im Bereich von blauem Licht, insbesondere zwischen 400 nm und 440 nm, liegt.

14. Speicherschicht nach Anspruch 13, **dadurch gekennzeichnet, dass** das Medium (1) einen ersten Farbstoff enthält, welcher die Komponenten (E_{S}, E_{P}) der Emissionsstrahlung im ersten Wellenlängenbereich zumindest teilweise absorbieren kann.

15. Speicherschicht nach Anspruch 14, **dadurch gekennzeichnet, dass** das Medium (21) den ersten Farbstoff in Form von roten Farbpigmenten enthält.

16. Speicherschicht nach Anspruch 12, **dadurch gekennzeichnet, dass** der zweite Wellenlängenbereich im Bereich von rotem Licht, insbesondere zwischen 620 nm und 690 nm, liegt.

17. Speicherschicht nach Anspruch 12, **dadurch gekennzeichnet, dass** das Medium (21) den zweiten Farbstoff in Form von blauen Farbpigmenten enthält.

## Claims

1. A system comprising a scanner (10) and a storage layer (1), the storage layer (1) comprising a plurality of particles (20) that
- are designed to store X-ray information,
- can be excited by a stimulating radiation (3) to emit an emission radiation (7) corresponding to the X-ray information and
- are embedded in a medium (21) and are distributed over the entire thickness of the storage layer (1),
and said scanner (10) comprising
- an irradiating device (4) for irradiating a linear region (13) on the storage layer (1) with stimulating radiation (3) and
- a detector (9) for the spatially resolved detection of the emission radiation (7) emitted by the storage layer (1) along the linear region (13),
**characterised in that**
- said medium (21), in which the particles are embedded, can at least partially absorb components (respectively E_{S} and E_{P}), directed both perpendicularly and parallel to the plane of the storage layer (1), of the emission radiation emitted by the individual particles (20), thereby reducing the mean path length of the emission radiation emitted by the particles (20) within the storage layer (1) in all spatial directions, said medium (21) contains a second dye which can at least partially absorb components (respectively S_{S} and S_{P}), directed both perpendicularly and parallel to the plane of the storage layer, of the stimulating radiation in a second wavelength range, in which the particles (20) can be excited to emit emission radiation, said second dye having a high absorption for the stimulating radiation and a low absorption for the emission radiation, and
- **in that** the irradiating device (4) comprises several individual radiation sources (5) and a focusing device (6), the individual radiation sources (5) each emitting stimulating radiation beams (12) that are focused by the focusing device (6) on the linear region (13) of the storage layer (1) and are at least partially superimposed in the direction of the linear region (13), a continuous stimulating radiation line (13) on the storage layer (1) thus being obtained.

2. The system according to claim 1, wherein said medium (21) can at least partially absorb the components (E_{S}, E_{P}) of the emission radiation in a first wavelength range that lies in the blue-light range, in particular between 400 nm and 440 nm.

3. The system according to claim 2, wherein said medium (21) contains a first dye that can at least partially absorb the components (E_{S}, E_{P}) of the emission radiation in said first wavelength range.

4. The system according to claim 3, wherein said medium (21) contains the first dye in the form of red coloured pigments.

5. The system according to any of the preceding claims, wherein the second wavelength range lies in the red-light range, in particular between 620 nm and 690 nm.

6. The system according to claim 5, wherein said medium (21) contains the second dye in the form of blue coloured pigments.

7. The system according to any of the preceding claims, wherein said focusing device (6) comprises at least one cylindrical lens or one cylindrical mirror.

8. The system according to any of the preceding claims, wherein said detector (9) comprises a plurality of photosensitive detector elements (14) arranged along a line.

9. The system according to any of the preceding claims, wherein an imaging device (8) is provided that images the emission radiation (7) originating from the linear region (13) on the storage layer (1) onto the detector (9).

10. The system according to claim 9, wherein the imaging device (8) has a plurality of microlenses arranged along a line.

11. The system according to any of the preceding claims, wherein the irradiating device (4) is arranged ahead of the detector (9) with respect to a transport direction (T) in which the scanner (10) is moved relative to the storage layer (1).

12. A storage layer for storing X-ray information comprising a plurality of particles (20) that
- are designed to store X-ray information,
- can be excited by a stimulating radiation (3) to emit an emission radiation (7) corresponding to the X-ray information and
- are embedded in a medium (21) and are distributed over the entire thickness of the storage layer (1),
**characterised in that**
- said medium (21), in which the particles are embedded, can at least partially absorb components (respectively E_{S} and E_{P}), directed both perpendicularly and parallel to the plane of the storage layer (1), of the emission radiation emitted by the individual particles (20), thereby reducing the mean path length of the emission radiation emitted by the particles (20) within the storage layer (1) in all spatial directions, and
- **in that** said medium (21) contains a second dye which can at least partially absorb components (respectively S_{S} and S_{P}), directed both perpendicularly and parallel to the plane of the storage layer, of the stimulating radiation in a second wavelength range, in which the particles (20) can be excited to emit emission radiation, said second dye having a high absorption for the stimulating radiation and a low absorption for the emission radiation.

13. The storage layer according to claim 12, wherein said medium (21) can at least partially absorb the components (E_{S}, E_{P}) of the emission radiation in a first wavelength range that lies in the blue-light range, in particular between 400 nm and 440 nm.

14. The storage layer according to claim 13, wherein said medium (1) contains a first dye that can at least partially absorb the components (E_{S}, E_{P}) of the emission radiation in said first wavelength range.

15. The storage layer according to claim 14, wherein said medium (21) contains the first dye in the form of red coloured pigments.

16. The storage layer according to claim 12, wherein the second wavelength range lies in the red-light range, in particular between 620 nm and 690 nm.

17. The storage layer according to claim 12, wherein said medium (21) contains the second dye in the form of blue coloured pigments.

## Revendications

1. Système comportant un scanneur (10) et une couche de mémorisation (1), la couche de mémorisation (1) contenant une pluralité de particules (20), qui
- sont conçues pour la mémorisation d'informations radiographiques,
- peuvent être stimulées par un rayonnement de stimulation (3) pour l'émission d'un rayonnement d'émission (7) correspondant aux informations radiographiques, et
- sont enrobées dans un milieu (21) et réparties sur l'ensemble de l'épaisseur de la couche de mémorisation (1),
et le scanneur (10) comportant :
- un dispositif d'exposition (4) pour exposer une zone en forme de ligne (13) de la couche de mémorisation (1) à un rayonnement de stimulation (3), et
- un détecteur (9) pour la détection à résolution locale du rayonnement d'émission (7) émis par la couche de mémorisation (1) le long de la zone en forme de ligne (13),
**caractérisé en ce que**
- le milieu (21) dans lequel sont enrobées les particules peut absorber, au moins partiellement, des composantes (E_{S} ou E_{P}) orientées, aussi bien perpendiculairement que parallèlement au plan de la couche de mémorisation (1), du rayonnement d'émission qui est émis par les différentes particules (20), moyen par lequel la longueur moyenne du trajet dans la couche de mémorisation (1) du rayonnement d'émission émis par les particules (20) est raccourcie dans toutes les directions spatiales,
- le milieu (21) contient une deuxième matière colorante qui peut absorber, au moins partiellement, des composantes (S_{S} ou S_{P}) du rayonnement de stimulation orientées, aussi bien perpendiculairement que parallèlement au plan de la couche de mémorisation, dans une deuxième plage de longueur d'onde dans laquelle les particules (20) peuvent être stimulées pour émettre du rayonnement d'émission, la deuxième matière colorante étant hautement absorbante pour le rayonnement de stimulation, et faiblement absorbante pour le rayonnement d'émission, et
- le dispositif d'exposition (4) comporte plusieurs sources de rayonnement (5) individuelles et un dispositif de focalisation (6), les différentes sources de rayonnement (5) émettant respectivement des faisceaux (12) de rayonnement de stimulation, qui sont focalisés par le dispositif de focalisation (6) sur la zone en forme de ligne (13) de la couche de mémorisation (1), et se superposent, au moins partiellement, en direction de la zone en forme de ligne (13), une ligne continue (13) de rayonnement de stimulation étant ainsi obtenue sur la couche de mémorisation (1).

2. Système selon la revendication 1, **caractérisé en ce que** le milieu (21) peut absorber, au moins partiellement, les composantes (Eₛ, E_{P}) du rayonnement d'émission dans une première plage de longueur d'onde située dans la plage de la lumière bleue, notamment entre 400 nm et 440 nm.

3. Système selon la revendication 2, **caractérisé en ce que** le milieu (21) contient une première matière colorante qui peut absorber, au moins partiellement, les composantes (Eₛ, Ep) du rayonnement d'émission dans la première plage de longueur d'onde.

4. Système selon la revendication 3, **caractérisé en ce que** le milieu (21) contient la première matière colorante à l'état de pigments colorés rouges.

5. Système selon l'une des revendications précédentes, **caractérisé en ce que** la deuxième plage de longueur d'onde est située dans la plage de la lumière rouge, notamment entre 620 nm et 690 nm.

6. Système selon la revendication 5, **caractérisé en ce que** le milieu (21) contient la deuxième matière colorante à l'état de pigments colorés bleus.

7. Système selon l'une des revendications précédentes, **caractérisé en ce que** le dispositif de focalisation (6) comporte au moins une lentille cylindrique ou un miroir cylindrique.

8. Système selon l'une des revendications précédentes, **caractérisé en ce que** le détecteur (9) comporte une pluralité d'éléments de détection photosensibles (14) disposés le long d'une ligne.

9. Système selon l'une des revendications précédentes, **caractérisé en ce qu'**il est prévu un dispositif de reproduction (8), qui reproduit sur le détecteur (9) le rayonnement d'émission (7) émanant de la zone en forme de ligne (13) de la couche de mémorisation (1).

10. Système selon la revendication 9, **caractérisé en ce que** le dispositif de reproduction (8) comporte une pluralité de microlentilles disposées le long d'une ligne.

11. Système selon l'une des revendications précédentes, **caractérisé en ce que**, dans un sens de transport (T) dans lequel le scanneur (10) est déplacé par rapport à la couche de mémorisation (1), le dispositif d'exposition (4) est disposé en amont du détecteur (9).

12. Couche de mémorisation pour la mémorisation d'informations radiographiques, comportant une pluralité de particules (20), qui
- sont conçues pour la mémorisation d'informations radiographiques,
- peuvent être stimulées par un rayonnement de stimulation (3) pour l'émission d'un rayonnement d'émission (7) correspondant aux informations radiographiques, et
- sont enrobées dans un milieu (21) et réparties sur l'ensemble de l'épaisseur de la couche de mémorisation (1),
**caractérisée en ce que**
- le milieu (21) dans lequel sont enrobées les particules peut absorber, au moins partiellement, des composantes (Eₛ ou Ep) orientées, aussi bien perpendiculairement que parallèlement au plan de la couche de mémorisation (1), du rayonnement d'émission qui est émis par les différentes particules (20), moyen par lequel la longueur moyenne du trajet dans la couche de mémorisation (1) du rayonnement d'émission émis par les particules est raccourcie dans toutes les directions spatiales, et
- le milieu (21) contient une deuxième matière colorante qui peut absorber, au moins partiellement, des composantes (Sₛ ou S_{P}) du rayonnement de stimulation orientées, aussi bien perpendiculairement que parallèlement au plan de la couche de mémorisation, dans une deuxième plage de longueur d'onde dans laquelle les particules (20) peuvent être stimulées pour émettre du rayonnement d'émission, la deuxième matière colorante étant hautement absorbante pour le rayonnement de stimulation, et faiblement absorbante pour le rayonnement d'émission.

13. Couche de mémorisation selon la revendication 12, **caractérisée en ce que** le milieu (21) peut absorber, au moins partiellement, les composantes (Eₛ, E_{P}) du rayonnement d'émission dans une première plage de longueur d'onde située dans la plage de la lumière bleue, notamment entre 400 nm et 440 nm.

14. Couche de mémorisation selon la revendication 13, **caractérisée en ce que** le milieu (1) contient une première matière colorante qui peut absorber, au moins partiellement, les composantes (Eₛ, E_{P}) du rayonnement d'émission dans la première plage de longueur d'onde.

15. Couche de mémorisation selon la revendication 14, **caractérisée en ce que** le milieu (21) contient la première matière colorante à l'état de pigments colorés rouges.

16. Couche de mémorisation selon la revendication 12, **caractérisée en ce que** la deuxième plage de longueur d'onde est située dans la plage de la lumière rouge, notamment entre 620 nm et 690 nm.

17. Couche de mémorisation selon la revendication 12, **caractérisée en ce que** le milieu (21) contient la deuxième matière colorante à l'état de pigments colorés bleus.
